# EUROPÄISCHE PATENTANMELDUNG

(11) **EP 0 927 688 A1**
(43) Veröffentlichungstag der Anmeldung: **07.07.1999**
(21) Anmeldenummer: 98124067.4
(22) Anmeldetag: 18.12.1998
(51) Int. Cl.: B65G 17/20

(54) **Vorrichtung zum Transportieren von Lasten jeglicher Art**

(30) Priorität: 29.12.1997 DE 29722515 U
(71) Anmelder: Steiner, Willi, 66386 St. Ingbert (DE); Seiwert, Willi, 66763 Dillingen (DE)
(72) Erfinder: Steiner, Willi, 66386 St. Ingbert (DE); Seiwert, Willi, 66763 Dillingen (DE)
(74) Vertreter: Wieske, Thilo

(57) **Zusammenfassung**

Vorrichtung zum Transportieren von Lasten jeglicher Art, die ein endloses, angetriebenes, mit Hilfe von Umlenkrädern geführtes Seil aufweist, an dem sich die zu transportierende Last befindet, wobei Doppel-T-Schienen als Tragkonstruktion vorgesehen sind, daran Umlenkräder mit je einer Führungsrille drehbar gelagert sind, und wobei das Seil kabelartig unter Dauerspannung stehend ausgebildet ist und Transportwagen, die mit dem Seil fest verbunden sind, die Doppel-T-Schienen im unteren Bereich umgreifen und diese auf der Innenseite der Doppel-T-Schiene laufende Rollen aufweisen.

## Beschreibung

Die Erfindung betrifft eine Vorrichtung zum Transportieren von Lasten jeglicher Art, die ein endloses, angetriebenes, mit Hilfe von Umlenkrädern geführtes Seil aufweist, an dem sich die zu transportierende Last befindet.

Fördereinrichtungen dieser Art, auch Seilförderer genannt, sind grundsätzlich bekannt. Sie sind üblicherweise für größere zu transportierende Lasten bestimmt, d.h. als Seil wird in der Regel ein Stahlseil verwendet und die Gesamtkonstruktion ist für den besagten Transport größerer Lasten ausgelegt.

Der Erfindung liegt die Aufgabe zugrunde, eine Vorrichtung der eingangs näher bezeichneten Art zu schaffen, die ausschließlich für den Transport von Lasten geringeren Gewichts bestimmt ist und dementsprechend eine Leicht-Bauweise aufweisen soll.

Diese Aufgabe wird erfindungsgemäß dadurch gelöst, daß Doppel-T-Schienen als Tragkonstruktion vorgesehen sind, daran Umlenkräder mit je einer Führungsrille drehbar gelagert sind, daß das Seil kabelartig unter Dauerspannung stehend ausgebildet ist und daß Transportwagen, die mit dem Seil fest verbunden sind, die Doppel-T-Schiene im unteren Bereich umgreifen und diese auf der Innenseite der Doppel-T-Schiene laufende Rollen aufweisen.

Gemäß einer weiteren Ausbildung der Erfindung bestehen die Doppel-T-Schienen aus Leichtmetall oder einer Aluminium-Legierung.

Eine andere Ausbildung der Erfindung besteht darin, daß die Doppel-T-Schienen an der Oberseite eine Tasche aufweisen.

Erfindungsgemäß ist es auch, daß die Umlenkräder aus einem Verbund-Kunststoff bestehen.

Ein besonderes Merkmal der Erfindung ist das kabelartig ausgebildete Seil, was zweckmäßig einen Kern aus Synthetikfaser hat, der mit einer Hülle aus Polyurethan versehen ist.

Im Rahmen der Erfindung liegt es auch, daß die Transportwagen ein Gehänge zur Aufnahme der Last aufweisen.

Auch können erfindungsgemäß zwei Transportwagen miteinander gekoppelt werden.

Erfindungsgemäß bestehen die Transportwagen aus zwei Halbschalen.

Die mit der Erfindung erzielten Vorteile bestehen im wesentlichen darin, daß durch die erfindungsgemäße Konstruktion und die überraschende Auswahl der Werkstoffe für alle Bauelemente sich eine sehr leichte Bauweise ergibt. Auch kann die sich ergebende leichte Konstruktion des neuen Transportsystems einfach an die verschiedensten Einsatzzwecke angepaßt werden. Als Beispiele seien genannt: die Automobil-Industrie, die Kunststoff-Industrie, der Maschinenbau, die Textilbranche und die Nahrungsmittel-Industrie. Die erfindungsgemäße Vorrichtung arbeitet geräuscharm und verursacht kaum eine Verschmutzung ihrer Umgebung.

Die Erfindung wird anhand der Zeichnungen näher beschrieben.

Es zeigen:
- Fig. 1: schematisch eine Vorrichtung zum Transportieren von Lasten in der Grund-Konstruktion,
- Fig. 2: die verwendete Doppel-T-Schiene,
- Fig. 3: perspektivisch einen mit dem umlaufenden Seil verbundenen Transportwagen,
- Fig. 4: die Anordnung nach Fig. 3 in Vorderansicht,
- Fig. 5: die Doppel-T-Schiene mit einem Transportwagen und einem daran angebrachten Gehänge für eine Last und
- Fig. 6: zwei miteinander gekoppelte Transportwagen.

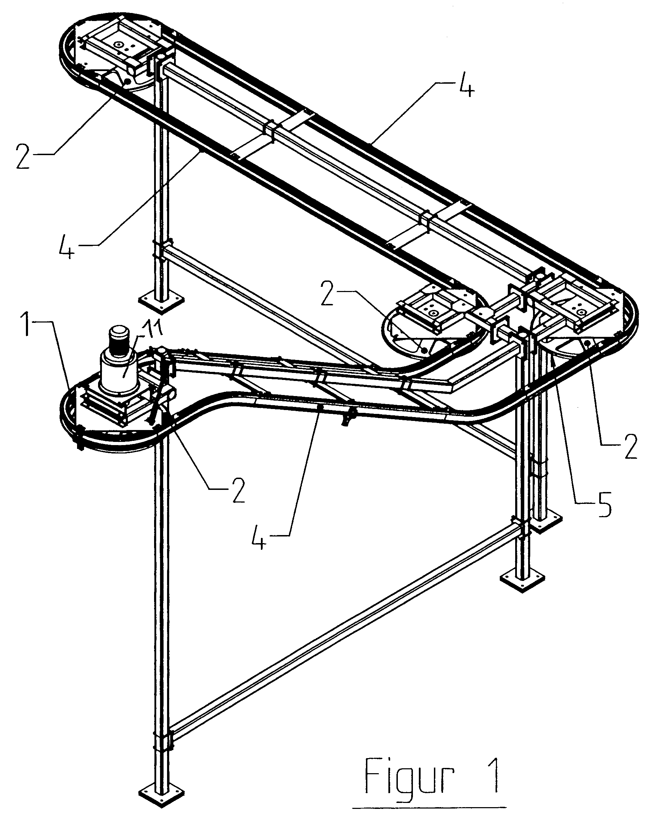

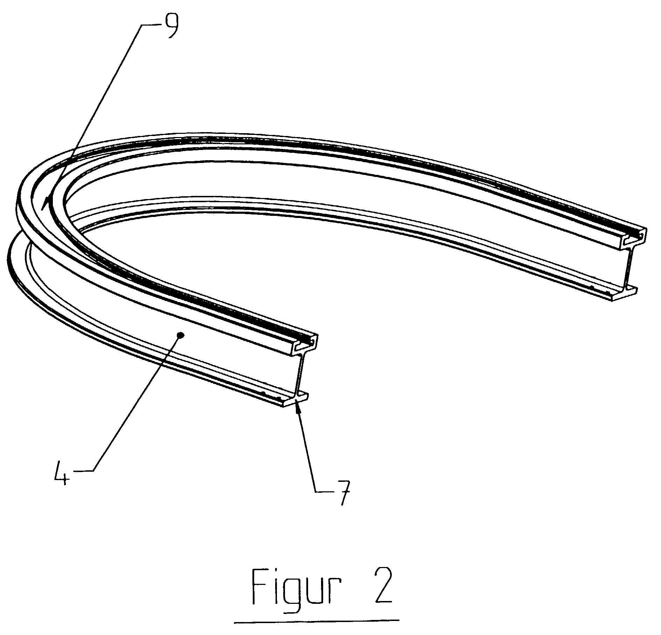

In Fig. 1 ist die grundsätzliche Anordnung der Vorrichtung zum Transportieren von Lasten jeglicher Art, in erster Linie von Lasten geringeren Gewichts, d.h. bis ca. 100 kg, dargestellt. Es ist ersichtlich, daß die erfindungsgemäßen Leichtmetall-Doppel-T-Schienen 4, was auch Fig. 2 zeigt, leicht allen Bedürfnissen angepaßt werden können. Die besagten Doppel-T-Schienen 4 aus Leichtmetall, insbesondere einer Aluminium-Legierung, sind leicht zu biegen, so daß ohne großen Aufwand alle möglichen Transportwege (horizontal, schräg, vertikal) realisiert werden können.

Die Doppel-T-Schiene 4 kann am oberen Ende eine Tasche 9 aufweisen (Fig.2), die zur Befestigung der Doppel-T-Schiene 4 dienen kann.

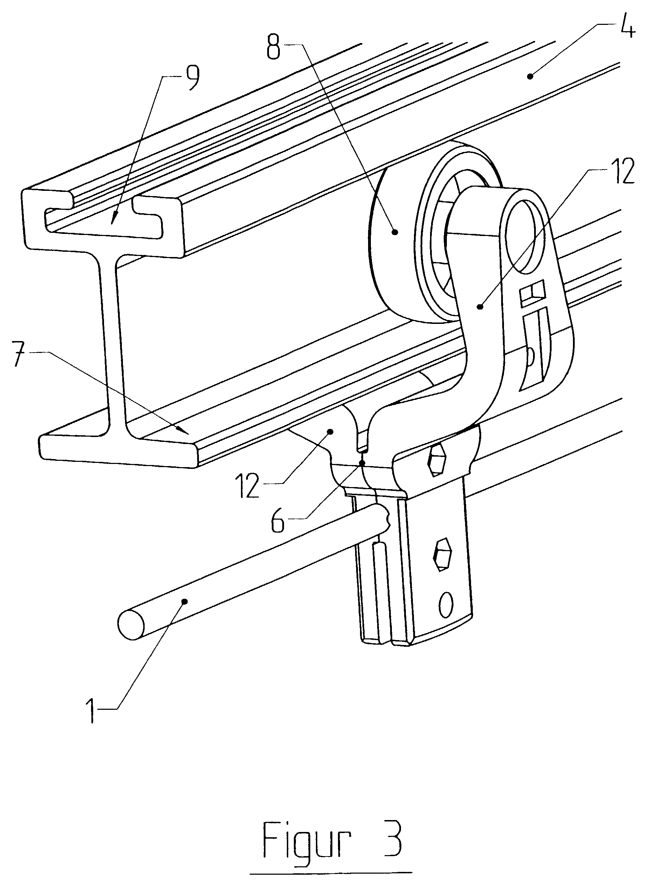

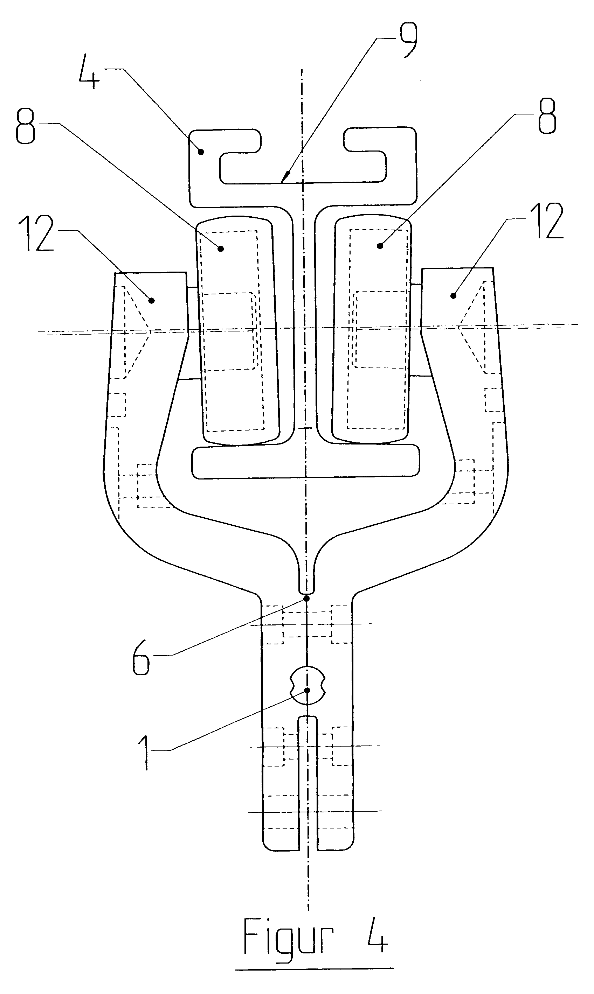

Die Fig. 3 und 4 zeigen, wie die Transportwagen 6, die aus zwei symetrischen Halbschalen 12 bestehen, den unteren Bereich 7 der Doppel-T-Schiene 4 umgreifen und zwei Rollen 8 auf der Innenseite der Doppel-T-Schiene 4 laufen. Jeder Transportwagen 6 ist mit dem Seil 1, wie in Fig. 3 angedeutet, fest verbunden, so daß beim Umlauf des Seils 1 die Transportwagen 6 entsprechend mitgezogen werden. - Eines der Umlenkräder 2 ist mit einem Antrieb 11 versehen, wie das Fig. 1 zeigt.

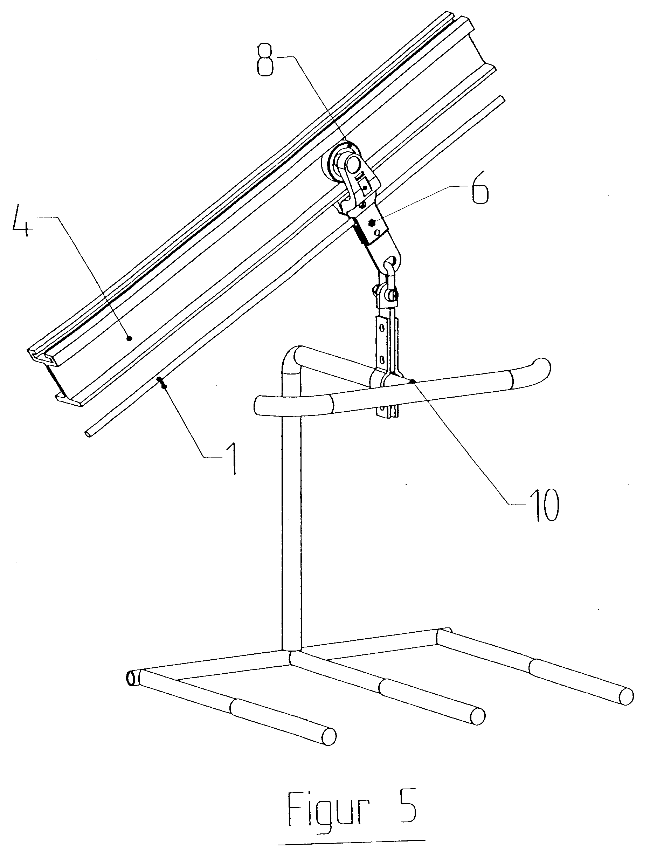

In Fig. 5 ist ein Abschnitt aus Fig. 1 dargestellt, wobei die Doppel-T-Schiene schräg steigend bzw. fallend angeordnet ist ohne zusätzliche Antriebe oder Fangvorrichtungen. Der Transportwagen 6 ist mit dem Seil 1 verbunden und an dem Transportwagen befindet sich ein Gehänge 10, beispielsweise zum Transportieren von Paketen. - Je nach Art der zu transportierenden Last können die Gehänge auch ganz anders ausgebildet sein, sie werden also der jeweiligen Last angepaßt.

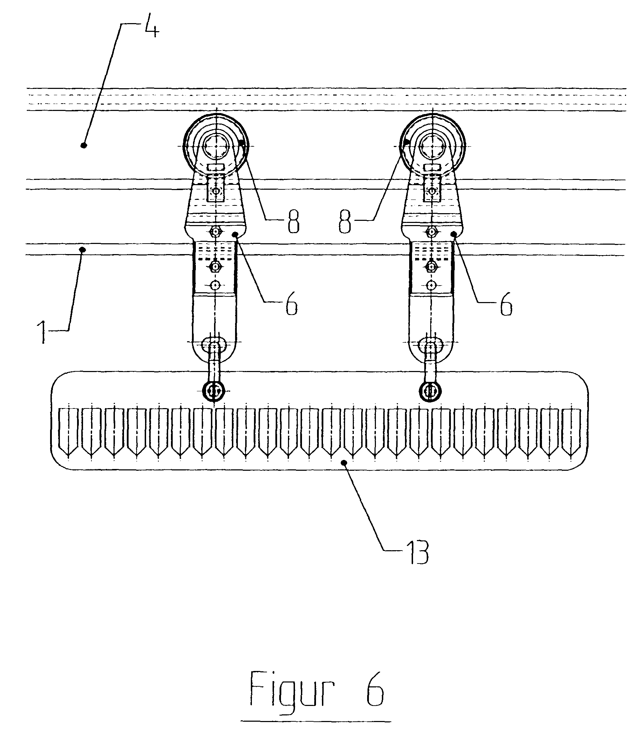

Fig. 6 zeigt in der Seitenansicht eine Doppel-T-Schiene 4, in der zwei Transportwagen 6 mit Hilfe der Rollen 8, gezogen durch das Seil 1, laufen können. Das Besondere an dieser Kontruktion ist, daß die zwei Transportwagen mit Hilfe eines Bügels 13 gekoppelt sind, um beispielsweise eine größere Last transportieren zu können.

Durch die Konstruktion der Transportwagen 6 - zwei Halbschalen 12 - in die das Seil 1 eingeklemmt ist, ist der Abstand von Transportwagen 6 zu Transportwagen 6 variabel.

Das erfindungsgemäß verwendete kabelartige Seil 1 kann beispielsweise einen Kern aus einer Synthetikfaser von einem Durchmesser von 6 mm haben, um den sich eine Hülle aus Polyurethan befindet, so daß sich ein Gesamtdurchmesser des Seiles 1 von 10 mm ergibt. Die Reißfestigkeit des kabelartigen Seiles 1 sollte in der Größenordnung von 1000 DaN sein. Die Transportwagen 6 können mit üblicher Technik an allen gewünschten Stellen angehalten und von der aufgegebenen Last befreit oder auch beladen werden.

## Patentansprüche

1. Vorrichtung zum Transportieren von Lasten jeglicher Art, die ein endloses, angetriebenes, mit Hilfe von Umlenkrädern geführtes Seil aufweist, an dem sich die zu transportierende Last befindet, **dadurch gekennzeichnet,** daß Doppel-T-Schienen (4) als Tragkonstruktion vorgesehen sind, daran Umlenkräder (2) mit je einer Führungsrille (5) drehbar gelagert sind, daß das Seil (1) kabelartig unter Dauerspannung stehend ausgebildet ist und daß Transportwagen (6), die mit dem Seil (1) fest verbunden sind, die Doppel-T-Schienen (4) im unteren Bereich (7) umgreifen und diese auf der Innenseite der Doppel-T-Schiene (4) laufende Rollen (8) aufweisen.

2. Vorrichtung nach Anspruch 1, **dadurch gekennzeichnet,** daß die Doppel-T-Schienen (4) aus Leichtmetall bestehen.

3. Vorrichtung nach Anspruch 1 oder 2, **dadurch gekennzeichnet,** daß die Doppel-T-Schienen (4) aus einer Aluminium-Legierung bestehen.

4. Vorrichtung nach einem oder mehreren der vorhergehenden Ansprüche, **dadurch gekennzeichnet,** daß die Doppel-T-Schienen (4) am oberen Ende eine Tasche (9) aufweisen.

5. Vorrichtung nach Anspruch 1, **dadurch gekennzeichnet,** daß die Umlenkräder (2) aus einem Kunststoff-Verbundmaterial bestehen.

6. Vorrichtung nach Anspruch 1, **dadurch gekennzeichnet,** daß das kabelartige Seil (1) als Kern eine Synthetikfaser hat, die mit einer Hülle aus Polyurethan versehen ist.

7. Vorrichtung nach Anspruch 1, **dadurch gekennzeichnet,** daß die Transportwagen (6) Gehänge (10) zur Aufnahme der Last aufweisen.

8. Vorrichtung nach Anspruch 1 oder 7, **dadurch gekennzeichnet,** daß zwei Transportwagen (6) miteinander koppelbar sind.

9. Vorrichtung nach einem oder mehreren der vorhergehenden Ansprüche, **dadurch gekennzeichnet,** daß die Transportwagen (6) zwei Halbschalen (12) aufweisen.
